(19) Europäisches Patentamt
European Patent Office
Office européen des brevets

(11) **EP 3 058 023 B1**

(12) **EUROPÄISCHE PATENTSCHRIFT**

(45) Veröffentlichungstag und Bekanntmachung des Hinweises auf die Patenterteilung:
**31.10.2018 Patentblatt 2018/44**

(21) Anmeldenummer: **14835469.9**

(22) Anmeldetag: **14.11.2014**

(51) Int Cl.:
*C08L 1/02* $^{(2006.01)}$        *C08J 3/075* $^{(2006.01)}$
*C08J 3/12* $^{(2006.01)}$

(86) Internationale Anmeldenummer:
**PCT/AT2014/000203**

(87) Internationale Veröffentlichungsnummer:
**WO 2015/054712 (23.04.2015 Gazette 2015/16)**

(54) **CELLULOSESUSPENSION, VERFAHREN ZU IHRER HERSTELLUNG UND VERWENDUNG**

CELLULOSE SUSPENSION, METHOD FOR THE PRODUCTION AND USE THEREOF

SUSPENSION DE CELLULOSE, PROCÉDÉ DE PRODUCTION DE LADITE SUSPENSION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.08.2016 Patentblatt 2016/34**

(73) Patentinhaber: **Lenzing AG**
**4860 Lenzing (AT)**

(72) Erfinder:
• **MÄNNER, Johann**
**A-4852 Weyregg (AT)**
• **OPIETNIK, Martina**
**A-4840 Vöcklabruck (AT)**
• **INNERLOHINGER, Josef**
**A-4880 Berg im Attergau (AT)**
• **REITER, Gerhard**
**A-4863 Seewalchen (AT)**
• **HAGER, Markus**
**A-4800 Attnang-Puchheim (AT)**

(74) Vertreter: **Hanemann, Otto**
**Lenzing AG**
**Werkstraße 2**
**A-4860 Lenzing (AT)**

(56) Entgegenhaltungen:
**WO-A1-2009/036480     WO-A1-2013/006876**

• **Martina Opietnik ET AL: "Gel - A Novel Cellulose Micro Suspension", , 1. Januar 2013 (2013-01-01), Seiten 89-92, XP055187455, Gefunden im Internet:
URL:http://www.lenzing.com/fileadmin/template/pdf/konzern/lenzinger_berichte/ausgabe_91_2013/Paper_16_Opietnik_et_al.pdf
[gefunden am 2015-05-05]**

**Beschreibung**

Die vorliegende Erfindung betrifft ein wirtschaftliches Verfahren zur Herstellung einer phasenstabilen Suspension aus Cellulose-II in Wasser mit hohem Wasserrückhaltevermögen und die Herstellung von Cellulosepartikeln. Derartige Suspensionen werden oftmals auch als "Gel" bezeichnet und in der vorliegenden Erfindung sollen beide Begriffe gleichbedeutend verstanden werden.

**Stand der Technik**

Es ist seit langem bekannt, daß aus einer Lösung von Cellulose in einem wässrigen, organischen Lösungsmittel nach dem sogenannten Lyocell-Verfahren Fasern und andere Formkörper erhalten werden können. Als Lösungsmittel wird insbesondere eine wässrige Lösung von NMMO (N-Methyl-morpholin-N-oxid) seit mehr als zwanzig Jahren in kommerziellem Maßstab eingesetzt. In den entsprechenden Produktionsanlagen werden üblicherweise Spinnmassen mit ca. 13 Gew.% Cellulose eingesetzt. Ein bevorzugter cellulosischer Rohstoff ist Zellstoff, aber auch andere cellulosische Rohstoffe wie z.B. Baumwoll-Linters können je nach den Umständen eingesetzt werden.

Sämtliche cellulosische Rohstoffe natürlichen Ursprungs weisen eine sogenannte Cellulose-I-Struktur auf. Diese unterscheidet sich, mittels bekannter Röntgenstreuungsmethoden eindeutig festzustellen, deutlich von der Cellulose-II-Struktur, die die nach dem Lyocell-Verfahren hergestellten Formkörper letztendlich aufweisen.

In der WO2013/006876A1 werden zunächst verschiedene Patente und Veröffentlichungen aus dem Stand der Technik genannt, die die Herstellung von Suspensionen aus nanofibrillärer Cellulose bzw. fasrigen Cellulosegelen aus Zellstoff beschreiben. Alle diese Produkte weisen eine Cellulose-I-Struktur auf, da sie ohne eine zwischenzeitliche Auflösung aus natürlichen cellulosischen Rohstoffen hergestellt wurden.

Weiterhin wird in der Patentanmeldung WO2013/006876A1 die Herstellung eines Cellulosegels mit Cellulose-II-Struktur aus 2%iger Lyocell-Spinnmasse beschrieben. Zur Herstellung von Cellulosegel aus 2%iger Lyocell-Spinnmasse kann gemäß dem Stand der Technik in einem ersten Schritt die Spinnmasse in einem Rührreaktor in Wasser ausgefällt werden. Gemäß der WO2013/006876A1 wird stattdessen die Spinnmasse frei fließend unter ihre Erstarrungstemperatur abgekühlt und die erstarrte Celluloselösung zu einem Granulat zerkleinert. Die so hergestellten Cellulosegranulate werden NMMO-frei gewaschen und anschließend mit einer Stoffdichte von 2% Cellulose in VE-Wasser mittels Nassmahlung in einer Kolloidmühle zerkleinert. Daraus resultiert eine Mikrosuspension, die einen stabilen, gelartigen Charakter aufweist. Die Eigenschaften des Cellulosegels werden dabei durch das Wasserrückhaltevermögen (WRV) und die Partikelgröße mittels Laserbeugung beschrieben.

In der WO2013/006876A1 wird anhand von Beispielen argumentiert, dass es nicht möglich sei, mit dem gleichen Verfahren auch aus Granulaten bzw. Fasern, die aus einer 13%igen anstatt der erfindungsgemäßen 2%igen Spinnmasse hergestellt wurden, eine gleichwertige Cellulosesuspension mit gelartigen Eigenschaften herzustellen. Zum Vergleich sind in Tabelle 1 die WRV-Ergebnisse aus WO2013/006876A1 dargestellt. Verwendet man im erfindungsgemäßen Verfahren der WO2013/006876A1 eine 13%ige anstatt der erfindungsgemäßen 2%igen Spinnmasse, so erhält man eine Cellulosesuspension mit einem WRV von lediglich 250%. Dies liegt im gleichen Bereich wie das von Suspensionen, die durch Zerkleinerung von Lyocell-Bändchenfasern (WRV = 270%) oder Saiccor-Zellstoff (WRV = 180%) hergestellt wurden. Demgegenüber sind Suspensionen gemäß WO2013/006876A1 aus 2%iger Spinnmasse stabil ohne Phasentrennung und haben ein WRV im Bereich von 800%.

Als weiteres Merkmal wird in der WO2013/006876A1 der Zusammenhang des WRV und der Viskosität in Abhängigkeit von der Cellulosekonzentration von Mikrosuspensionen, die zwischen 1 bis 3 Gew.-% Cellulose enthalten, dargestellt (siehe Tabelle 4 der WO2013/006876A1). Diese Werte zeigen, daß in den erfindungsgemäßen Cellulosegelen der WO2013/006876A1 zwar mit zunehmender Cellulosekonzentration das WRV ansteigt, aber auch die Viskosität so stark zunimmt, daß Gele mit höherer Cellulosekonzentration aufgrund ihrer hohen Viskosität praktisch nicht mehr verarbeitbar sind.

Ein wesentlicher Nachteil der Gelherstellung aus 2%iger Lyocell-Spinnmasse ist der hohe Aufwand bei der NMMO-Rückgewinnung. Gegenüber einer 13%igen Spinnmasse sind aufgrund des geringeren Cellulose- / NMMO-Verhältnisses bei 2%iger Spinnmasse von ca. 1:6 die NMMO-Rückgewinnungskosten auch um das mehr als 6-fache höher. Das betrifft sowohl die variablen und fixen Betriebskosten (Energiekosten, etc.) als auch die Investitionskosten bzw. Abschreibung.

Ein weiterer Nachteil ist, dass in den bestehenden Lyocell-Produktionsanlagen nur Spinnmassen mit etwa 13 Gew.-% Cellulose hergestellt werden. Das bedeutet, dass für die Herstellung von 2%iger Spinnmasse eine eigene Produktionsanlage errichtet werden müsste.

In der Patentanmeldung WO2009/036480 A1 wird die Herstellung von im Wesentlichen sphärischem Cellulose II Pulver durch Vermahlung von, aus dem Lyocell Prozess gefällten, NMMO frei gewaschenem und getrocknetem Cellulosegranulat beschrieben. Das daraus resultierende Cellulose II Pulver besteht aus mittleren Partikelgrößen von 1 - 400 $\mu$m.

In der Praxis erfolgt die Herstellung von Cellulosepartikeln nach der WO2009/036480 A1 folgendermaßen: Eine Lyocell-Spinnmasse wird mit Wasser in einer Schneidmühle zu einem irregulären Granulat mit einer Teilchengröße von 0,5 - 1,5 mm koaguliert. Dieses Granulat wird mit Wasser NMMO-frei gewaschen und getrocknet. Das trockene Granulat wird in einer ersten Grobmahlung mit Prallmühlen oder Langspaltmühlen auf Partikelgrößen mit einem durchschnittlichen Durchmesser von 50 - 200 $\mu$m gemahlen. In einer zweiten Feinmahlung mit Strahlmühlen werden dann durchschnittliche Partikelgrößen von minimal 5 $\mu$m erzeugt. Diese Feinmahlung ist sehr zeitintensiv, wodurch die Kapazitäten sehr gering und dadurch sehr kostenintensiv sind.

Im US-Patent US 5064950 wird die Herstellung von vernetzten Cellulose-II-Partikeln beschrieben.

In der WO 2004/043329 A2 wird die Herstellung und Anwendung von Cellulose-Mikroperlen mit einem Durchmesser von ca. 15 $\mu$m beschrieben. Die Herstellung erfolgt durch Ausfällung der Cellulose aus einer Mischung aus Viskose und Natriumpolyacrylat mit anschließender saurer Hydrolyse.

Das US-Patent US 5024831 beschreibt ebenfalls sphärische Cellulosepartikel mit einem durchschnittlichen Durchmesser von 3 - 50 $\mu$m und verweist auf verschiedene japanische Patente für deren Herstellung. Die darin beschriebenen Partikel bestehen aufgrund der Fällung aus dem Viskoseprozess zum Teil aus Cellulosederivaten und Cellulose-II.

Die drei zuletzt genannten Publikationen beschreiben stets Verfahren, in deren Endprodukt neben der Cellulose weitere Substanzen vorliegen, die in vielen Anwendungen unerwünscht sind.

**Aufgabe**

Die Aufgabe bestand gegenüber diesem Stand der Technik darin, eine Cellulosesuspension zur Verfügung zu stellen, die sich wirtschaftlicher herstellen und besser verarbeiten läßt als Cellulosesuspensionen aus dem Stand der Technik. Weiterhin bestand die Aufgabe, ein geeignetes Verfahren zur Herstellung einer solchen Suspension sowie neuartige Verwendungen für sie zur Verfügung zu stellen, insbesondere solche Verfahren und Verwendungen, in denen keine unerwünschten Begleitsubstanzen neben der Cellulose vorliegen.

**Beschreibung der Erfindung / Description**

Die Lösung der oben beschriebenen Aufgabe besteht in einer phasenstabilen Suspension aus underivatisierter Cellulose-II in Wasser mit hohem Wasserrückhaltevermögen (WRV), die eine Cellulosekonzentration zwischen 0,1 und 4,0 Gew.-% aufweist und bei der die Viskosität (in [Pa*s] bei einer Scherrate 50 s$^{-1}$) und das Wasserrückhaltevermögen (in %) in Abhängigkeit von der Cellulosekonzentration x (in Gew.-%, bezogen auf die Gesamtmenge der Suspension) folgenden Zusammenhang aufweisen:

$$(\text{Viskosität bei } 50 \text{ s}^{-1} / \text{WRV}) * 10000 < 0{,}4038 * x^{2{,}8132}$$

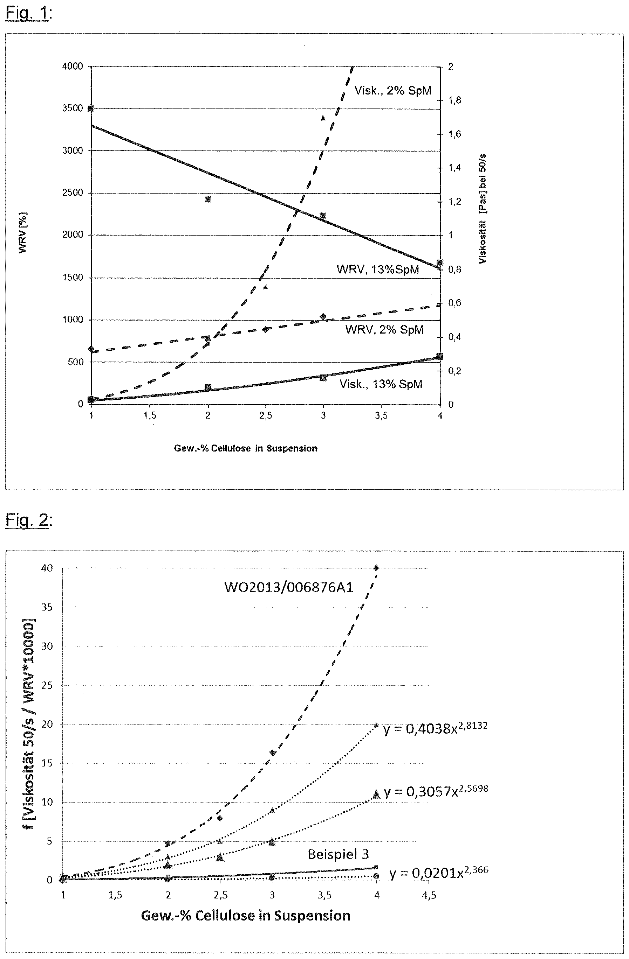

Der auf diese Weise beschreibbare, bei der erfindungsgemäßen Suspension gefundene Zusammenhang ist einzigartig, insbesondere für underivatisierte Cellulose. Die gemäß dem Stand der Technik, z.B. gemäß WO2013/006876A1 aus Spinnmassen mit 2 Gew.-% Cellulose-II, hergestellten Suspensionen liegen immer erheblich über dem durch diese Formel begrenzten Bereich (siehe Fig. 2).

Der erfindungsgemäße Eigenschaftsbereich wird außerdem nach unten begrenzt durch den Zusammenhang:

$$(\text{Viskosität bei } 50 \text{ s}^{-1} / \text{WRV}) * 10000 > 0{,}0201 * x^{2{,}366}$$

Grundsätzlich läßt sich feststellen, daß Suspensionen umso näher an der oberen Bereichsgrenze liegen, je niedriger die Cellulosekonzentration der Spinnmasse ist, aus der sie hergestellt wurden.

Bevorzugt ist eine Cellulosekonzentration in der Suspension zwischen 0,5 und 5,0 Gew.-%, besonders bevorzugt zwischen 1,0 und 4,0 Gew.%.

Die hier offenbarte Suspension unterscheidet sich im Eigenschaftsprofil deutlich beispielsweise von den in WO2013/006876A1 dargestellten Cellulose-II-Suspensionen, die aus 2%iger Spinnmasse hergestellt werden, insbesondere durch ein deutlich höheres Wasserrückhaltevermögen (WRV) und ein niedrigeres Viskositätsniveau. Durch diese Kombination von Eigenschaften, die in der erfindungsgemäßen Cellulosesuspension zum ersten Mal erreicht werden konnte, wird sowohl die Leistung der Suspensionsherstellung als auch deren Verarbeitbarkeit erheblich erhöht. Während bei den Cellulosesuspensionen aus dem Stand der Technik das WRV mit steigendem Cellulosegehalt in der Suspension zunimmt, kann es bei erfindungsgemäßen Suspensionen typischerweise mit steigendem Cellulosegehalt sogar abnehmen (siehe Fig. 1).

Bevorzugt sind erfindungsgemäß Suspensionen, bei denen die Viskosität (in [Pa*s] bei einer Scherrate 50 s$^{-1}$) und das Wasserrückhaltevermögen (in %) in Abhängigkeit von der Cellulosekonzentration x (in Gew.-%, bezogen auf die Gesamtmenge der Suspension) folgenden Zusammenhang aufweisen:

$$\text{(Viskosität bei 50 s}^{-1} \text{ / WRV) } * 10000 < 0{,}3057*x^{2,5698}$$

Bevorzugt sind weiterhin solche Cellulose-II-Suspensionen mit den oben genannten Eigenschaften, deren WRV zwischen 500 und 5000%, besonders bevorzugt zwischen 1000 und 4000 liegt.

Gegenstand der vorliegenden Erfindung ist ein Verfahren zur Herstellung einer phasenstabilen Suspension aus Cellulose-II in Wasser mit hohem Wasserrückhaltevermögen, gekennzeichnet durch folgende Verfahrensschritte:

    a. Herstellung einer Spinnmasse mit 10 bis 15 Gew.-% Cellulose gemäß dem Lyocell-Verfahren,
    b. Ausfällen der Cellulose, wobei ein NMMO- und cellulosehaltiges Material erhalten wird,
    c. Waschen des Materials, bis es im Wesentlichen NMMO-frei ist,
    d. Enzymatische Behandlung des NMMO-frei gewaschenen, feuchten Materials,
    e. Zerkleinerung in einem Zerkleinerungsaggregat, wobei eine grobe Cellulose-Suspension erhalten wird,
    f. Mikrozerkleinerung in einem Hochdruckhomogenisator zu einer stabilen Mikrosuspension.

Dieses Verfahren erzeugt nicht nur die oben beschriebenen, neuartigen und vorteilhaften Cellulose-II-Suspensionen, sondern ist auch noch wesentlich wirtschaftlicher als beispielsweise das im Stand der Technik in WO2013/006876A1 beschriebene Verfahren. Bei einer Cellulosekonzentration von weniger als 10 Gew.-% Cellulose in der Spinnmasse ist die NMMO-Rückgewinnung nicht wirtschaftlich und der Investitionsaufwand zu groß und bei einer Cellulosekonzentration von mehr als 15 Gew.-% ist die Spinnmasse nicht mehr gut verarbeitbar.

Das in Schritt b. erhaltene Material kann grundsätzlich verschiedene Formen aufweisen. Beispielsweise kann es sich dabei um Granulate, Fasern, vliesähnliche, fasrige oder sogar schwammartige Strukturen handeln. Am geringsten ist der Aufwand, wenn - beispielsweise mit einem Unterwassergranulator oder einer Schneidmühle - ein grobes Granulat hergestellt wird.

Bevorzugt wird in Schritt d. als Enzym eine Endoglucanase oder eine Mischung aus Endo- und Exoglucanasen verwendet. Die Enzymkonzentration in Schritt d. sollte bevorzugt 0,1 bis 10,0 Gew.-% betragen.

Die Zerkleinerung in Schritt e. erfolgt bevorzugt in einem Zerkleinerungsaggregat, wie einer weiteren Schneidmühle, einer Kolloidmühle oder einem Refiner.

Bei der Ausfällung von Lyocell-Spinnmassen mit erfindungsgemäßen Cellulosekonzentrationen in Wasser oder Wasser/NMMO-Gemischen weisen die gebildeten Formkörper eine je nach den angewendeten Fällbedingungen mehr oder weniger kompakte äußere Hautstruktur auf. Dabei handelt es sich stets um Cellulose-II-Strukturen mit unterschiedlichen Verhältnissen an kristallinen und amorphen Bereichen. Mit der in der WO2013/006876A1 beschriebenen Nassmahlung, beispielsweise mit einer Kolloidmühle, war es nicht möglich, aus solchem Material, das durch Ausfällung von 10 - 15 Gew.-%iger Celluloselösung erhalten wurde, Mikrosuspensionen herzustellen.

Erfindungsgemäß wird im letzten Zerkleinerungsschritt ein Hochdruckhomogenisator eingesetzt. Charakteristisch für diesen Gerätetyp ist, daß die Zerkleinerung nicht durch Scherung, Prall oder Rotor-Stator-Prinzipien erfolgt, sondern durch eine spontane Entspannung der unter hohem Druck stehenden Mahlflüssigkeit und die dabei auftretenden Kavitationen und Turbulenzen. Das erfindungsgemäße Verfahren funktioniert besonders effektiv, wenn in Schritt f. der Druck im Hochdruckhomogenisator zwischen 100 und 2000 bar beträgt. Um die Wirkung des Hochdruckhomogenisators weiter zu verbessern, soll er in Form eines Schleifenreaktors betrieben werden. Besonders bevorzugt wird dabei in Schritt f. die Suspension zwischen 1 und 10 mal, bevorzugt 1 bis 4 mal, durch den Hochdruckhomogenisator geführt. Dabei erwärmt sich die Suspension stark. Um eine Schädigung der Suspension zu vermeiden, kann es daher angebracht sein, im Suspensionskreislauf eine Kühlmöglichkeit zu schaffen, beispielsweise durch Einbau eines Wärmetauschers.

Kommerziell ist das erfindungsgemäße Verfahren besonders interessant, wenn die Suspensionsherstellung mit einer auch für die Stapelfaserproduktion geeigneten Spinnmasse durchgeführt werden kann. Daher ist es vorteilhaft, wenn in Schritt a. des erfindungsgemäßen Verfahrens die Cellulosekonzentration in der Spinnmasse 12 bis 14 Gew.-% beträgt.

Ebenfalls Gegenstand der vorliegenden Erfindung ist die Herstellung von im Wesentlichen sphärischen Cellulosepartikeln mit Cellulose-II-Struktur, einer sphärischen Form und einem durchschnittlichen Durchmesser $x_{50}$ von 1 bis 4 $\mu$m, wobei die Formung der Cellulosepartikel erfindungsgemäß durch Sprühtrocknung erfolgt.

Auch die Verwendung der aus der WO 2013006876 A1 (aus 2%iger Spinnmasse) bekannten Cellulosesuspension oder anderer, vergleichbarer Cellulosesuspensionen ist hierbei grundsätzlich möglich Sie scheidet aber vermutlich aufgrund ihrer weniger wirtschaftlichen Herstellung in den meisten Fällen aus.

Das zu trocknende Substrat, d.h. die erfindungsgemäße Cellulosesuspension wird über eine Düse zu feinen Tröpfchen zerstäubt. Die Tröpfchen werden mit dem Heißluftstrom in ein Abscheidezyklon ausgetragen und dabei Wasser verdampft. Durch verschiedene Parameter wie die Cellulosekonzentration, die Größe der Sprühdüse oder die Differenz von Zuluft- und Ablufttemperatur kann die Partikelstruktur beeinflusst werden. Die dabei erhaltenen Cellulosepartikel weisen eine annähernd sphärische Form und einen durchschnittlichen Durchmesser von < 1 - 5 $\mu$m auf. Die annähernd sphärische Form kommt vor allem durch das Achsenverhältnis (I:d) zwischen 1 und 2,5 zum Ausdruck. Die Oberfläche der Partikel ist unregelmäßig und im Mikroskop sind deutlich Ecken und Kanten zu erkennen; die Partikel zeigen im Mikroskop aber keine faserartigen Ausfransungen oder Fibrillen. Es handelt sich also keineswegs um Kugeln mit glatter Oberfläche.

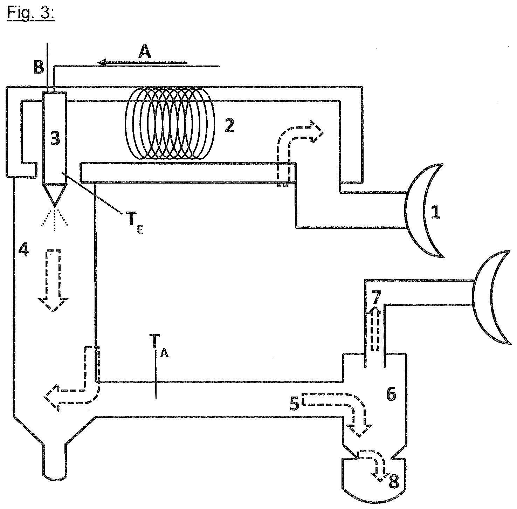

Prinzip und Schema der Sprühtrocknung sind in Fig. 3 dargestellt. Darin ist:

A: Zuführung der Cellulosesuspension.
B: Zuführung der Sprühluft (=Druckluft)
$T_E$: Temperaturmessung für die Zuluft
$T_A$: Temperaturmessung für die Abluft
1: Ansaugöffnung für Zuluft
2: Elektrische Heizung
3 : Sprühdüse
4 : Sprühzylinder
5 : Abluft
6 : Abscheidezyklon
7 : Abluft Ausgangsfilter
8 : Auffanggefäß für die getrockneten Partikel

Im Folgenden wird die Erfindung anhand von Beispielen beschrieben.

**Beispiele**

Messung des Wasserrückhaltevermögens (WRV):

Zur Bestimmung des WRV wird eine definierte Menge Suspension in spezielle Zentrifugengläser (mit Ablauf für das Wasser) eingebracht. Danach wird 15 Minuten lang bei 3000 rpm abgeschleudert und die feuchte Cellulose anschließend sofort gewogen. Die feuchte Cellulose wird 4h lang bei 105°C getrocknet und danach das Trockengewicht bestimmt. Die Berechnung des WRV erfolgt nach folgender Formel:

$$WRV[\%] = (m_f - m_t)/m_t * 100 \quad (m_f = \text{Masse feucht}, m_t = \text{Masse trocken})$$

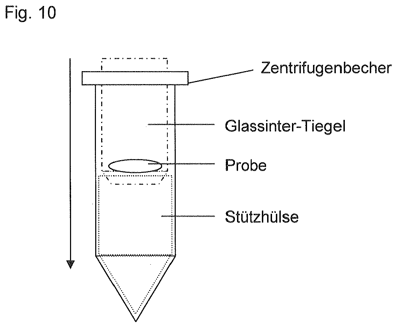

Im Folgenden werden die Arbeitsschritte für die WRV-Bestimmung detailliert beschrieben:
Das Wasserrückhaltevermögen (WRV) ist ein Messwert, der angibt, wieviel Wasser von einer Probe nach Zentrifugieren zurückgehalten wird. Das Wasserrückhaltevermögen wird in Prozent zum Trockengewicht angegeben. Folgende Geräte werden verwendet: Laborzentrifuge, bspw. Fa. Hettich, Glassinter-Tiegel 15 ml mit Porosität 4, bspw. Typ ROBU H11 aus Borsilikatglas 3.3; Eppendorf-Pipette; Eppendorf-Pipettenspitzen 10 ml; an die Glassinter-Tiegel angepasste Stützhülsen (gefertigt aus abgeschnittenen Zentrifugenbechern) - siehe Fig. 10; Umlufttrockenschrank; Analysenwaage.

Die Proben müssen vor der Analyse gut durchgeschüttelt werden. Es ist darauf zu achten, dass sich in den Stützhülsen vor der Messung keine Wasserrückstände befinden. Acht saubere, trockene und nummerierte Glassinter-Tiegel werden abgewogen - Genauigkeit 0,0001g. Die Stützhülsen und Glassinter-Tiegel werden in die Zentrifugenbecher gegeben. Je 5ml der zu bestimmenden Suspension werden mit einer Eppendorf-Pipette in einen Glassintertiegel pipettiert. Anschließend wird15 Minuten bei 3000 U/min in der Laborzentrifuge abgeschleudert. Die Tiegel müssen sofort nach dem Zentrifugieren unten abgewischt werden. Danach werden die Tiegel auf der Analysenwaage sofort ausgewogen und das Gesamtgewicht notiert. Die Genauigkeit muß 0,0001g betragen. Die Tiegel werden dann 4h bei 105°C im Umlufttrockenschrank trocknen und min. 30 Minuten in Exsikkator auskühlen gelassen. Anschließend werden die Proben trocken zurückgewogen (Genauigkeit 0,0001g). Die Bestimmung wird vierfach durchgeführt.

Die Tiegel sind nach der Analyse sorgfältig mit heißem Wasser (60-70°C) und Chromschwefelsäure zu reinigen. Die anschließende Trocknung der Tiegel erfolgt für 4 h bei 105°C im Umlufttrockenschrank.

Messung der Viskosität:
Die Viskositäten wurden mittels eines Malvern Kinexus-Rheometers mit einem Konus-Platte-Messsystem (CP4/40 S0687 SS) bei einer Scherrate von 50 s$^{-1}$ bestimmt.

Beispiel 1:

Eine 13%ige Lyocell-Spinnmasse wird mit einem Unterwassergranulierer in 50%igem NMMO als Fällbadmedium zu einem kugeligen Granulat koaguliert, das Granulat aus dem Fällbehälter abgetrennt, mit vollentsalztem (VE)-Wasser NMMO-frei gewaschen und vom restlichen Waschwasser abzentrifugiert. Das feuchte Granulat wird bei einem Flottenverhältnis von 1:15 mit 1% Enzym (Endoglucanase Novozym 476) 90 min bei 60°C unter leichtem Rühren behandelt. Das Enzym wird anschließend abgetrennt, ausgewaschen und abzentrifugiert. Durch kurzzeitiges Erhitzen auf 90°C wird verbleibendes Enzym deaktiviert. Dieses Granulat wird dann bei einer Stoffdichte von 2% Cellulose in VE-Wasser mit einer Kolloidmühle IKA MK2000/10 15 min lang vorgemahlen und weiter über einen Hochdruckhomogenisator GEA Niro Soavi NS 1001L-2K bei 1000 bar und 4 Durchläufen zu einer Mikroemulsion geformt. Das erhaltene Material weist einen WRV von 1661% auf und ist über mehr als 2 Wochen ohne Phasentrennung stabil.

Beispiel 2:

Eine 13%ige Lyocell-Spinnmasse wird mit einer Schneidmühle in Wasser als Fällbadmedium zu einem irregulären Granulat koaguliert, aus dem Fällbehälter abgetrennt, mit VE-Wasser NMMO-frei gewaschen und vom restlichen Waschwasser abzentrifugiert. Das feuchte Granulat wird bei einem Flottenverhältnis von 1:15 mit 1% Enzym (Endoglucanase Novozym 476) 90 min bei 60°C unter leichtem Rühren behandelt. Das Enzym wird anschließend abgetrennt, ausgewaschen und abzentrifugiert. Durch kurzzeitiges Erhitzen auf 90°C wird im feuchten Granulat das verbleibende Enzym deaktiviert. Dieses Granulat wird dann bei einer Stoffdichte von 2 Gew.% Cellulose in VE-Wasser mit einer Kolloidmühle 15 min vorgemahlen und weiter über einen Hochdruckhomogenisator bei 1000 bar und 5 Durchläufen zu einer Mikroemulsion geformt. Das erhalten Material weist einen WRV von 1524% auf und ist über mehr als 2 Wochen ohne Phasentrennung stabil.

Beispiel 3:

Eine 13%ige Lyocell-Spinnmasse wird mit einer Schneidmühle in Wasser als Fällmedium zu einem irregulären Granulat koaguliert, aus dem Fällbehälter abgetrennt, mit VE-Wasser NMMO-frei gewaschen und vom restlichen Waschwasser abzentrifugiert. Die Suspension des feuchten Granulates wird auf jeweils 1, 2, 3 bzw. 4 Gew.% Cellulose mit VE-Wasser verdünnt, 1% Enzym (Novozym 476), bezogen auf trockene Cellulose, zugegeben und in einer Kolloidmühle 90 min bei 50°C behandelt. Durch kurzzeitiges Erhitzen auf 90°C wird das verbliebene Enzym deaktiviert. Anschließend wird das vorgemahlene Granulat in einem Hochdruckhomogenisator bei 1000 bar und 4 Durchläufen zu einer Mikroemulsion verarbeitet. Die erhaltenen Suspensionen sind über mehr als 2 Wochen ohne Phasentrennung stabil. WRV und Viskosität sind in Tabelle 1 dargestellt.

Tabelle 1:

|  | CelluloseKonzentration [%] | Wasserrückhaltevermögen WRV [%] | Viskosität bei Scherrate 50/s [Pas] |
|---|---|---|---|
| GEA-57C | 1 | 3499 | 0,0232 |
| GEA-58C | 2 | 2422 | 0,098 |
| GEA-59C | 3 | 2228 | 0,154 |
| GEA-60C | 4 | 1686 | 0,282 |

Tabelle 2:

| Cellulosesuspension | | [Gew.%] Cell. | WRV [%] | | Visk. [Pa*s] | | f=Visk/WRV*10000 | |
|---|---|---|---|---|---|---|---|---|
| 2% SpM | 13% SpM | | 2% SpM | 13% SpM | 2% SpM | 13% SpM | 2% SpM | 13% SpM |
| G12 | GEA-57C | 1 | 649 | 3499 | 0,033 | 0,0232 | 0,51 | 0,07 |
| G39 | GEA-58C | 2 | 760 | 2422 | 0,36 | 0,098 | 4,74 | 0,40 |
| G37 | - | 2,5 | 877 | - | 0,696 | - | 7,94 | - |

(fortgesetzt)

| Cellulosesuspension | | [Gew.%] Cell. | WRV [%] | | Visk. [Pa*s] | | f=Visk/WRV*10000 | |
|---|---|---|---|---|---|---|---|---|
| 2% SpM | 13% SpM | | 2% SpM | 13% SpM | 2% SpM | 13% SpM | 2% SpM | 13% SpM |
| G5 | GEA-59C | 3 | 1034 | 2228 | 1,693 | 0,154 | 16,37 | 0,69 |
| - | GEA-60C | 4 | - | 1686 | - | 0,282 | - | 1,67 |

Vergleicht man das WRV und die Viskosität der Cellulosesuspensionen aus Beispiel 3 mit den Ergebnissen aus WO2013/006876A1 (dortige Tabelle 4; Spinnmasse mit 2Gew.-% Cellulose), so ist erkennbar, dass sich die Eigenschaftsprofile der Muster des Beispiels 3 deutlich von WO2013/006876A1 unterscheiden (Tabelle 2). In Fig. 1 ist das unterschiedliche Verhalten auch graphisch dargestellt.

Fig. 2 zeigt die Lage der erfindungsgemäßen Suspensionen aus Beispiel 3 (durchgezogene Linie) im Vergleich zu den Begrenzungslinien des erfinderischen Bereichs (punktierte Linien, dazu die jeweilige Gleichung) und auch die Lage einer Suspension aus dem Stand der Technik, der WO2013/006876A1 (gestrichelte Linie).

In den folgenden Beispielen wurden Cellulose-Mikrosuspensionen mit unterschiedlichen Cellulosegehalten bei unterschiedlichen Bedingungen in einem Laborsprühtrockner (Büchi Mini Spray Dryer B-290) getrocknet. Die Bestimmung der Partikelgrößenverteilung der daraus erhaltenen Proben erfolgte mittels Laserbeugung in Ethanol (Messgerät Fa. Helos).

Beispiel 4:

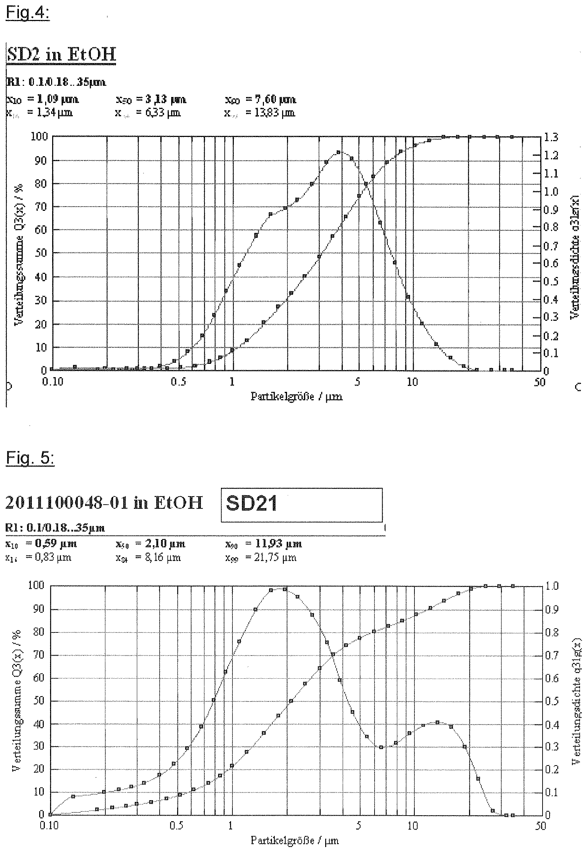

Eine gemäß Beispiel 2 hergestellte, erfindungsgemäße Cellulose-Mikrosuspension mit 2 Gew.-% Cellulosegehalt wurde bei 180°C Zuluft- und 62°C Ablufttemperatur getrocknet. Die Düsengröße betrug 1,5 mm. Die Partikelgrößenanalyse ergab folgende Werte: $x_{10}$=1,09 $\mu$m, $x_{50}$=3,13 $\mu$m, $x_{90}$=7,6 $\mu$m. Fig. 4 zeigt die Partikelgrößenverteilung.

Beispiel 6:

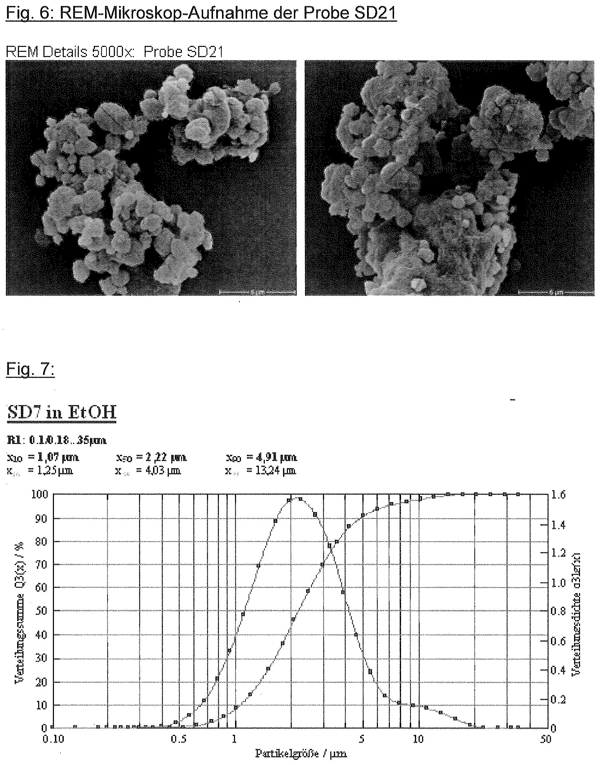

Eine gemäß Beispiel 2 hergestellte, erfindungsgemäße Cellulose-Mikrosuspension mit 0,25 Gew.-% Cellulosegehalt wurde bei 220°C Zuluft- und 124°C Ablufttemperatur getrocknet. Die Düsengröße betrug 1,5 mm. Die Partikelgrößenanalyse ergab folgende Werte: $x_{10}$=0,59 $\mu$m, $x_{50}$=2,1 $\mu$m, $x_{90}$=11,93 $\mu$m. Fig. 5 zeigt die Partikelgrößenverteilung, Fig. 6 REM-Mikroskop-Aufnahmen der hergestellten Partikel. Die Partikel weisen eine im Wesentlichen sphärische, aber nicht kugelförmige Form mit unregelmäßiger Oberfläche auf. Im Mikrofoto sind klar Ecken und Kanten zu erkennen.

Beispiel 7:

Eine gemäß Beispiel 2 hergestellte, erfindungsgemäße Cellulose-Mikrosuspension mit 0,5 Gew.-% Cellulosegehalt wurde bei 180°C Zuluft- und 83°C Ablufttemperatur getrocknet. Die Düsengröße betrug 1,4 mm. Die Partikelgrößenanalyse ergab folgende Werte: $x_{10}$=1,07 $\mu$m, $x_{50}$=2,22 $\mu$m, $x_{90}$=4,91$\mu$m. Fig. 7 zeigt die Partikelgrößenverteilung.

Beispiel 8:

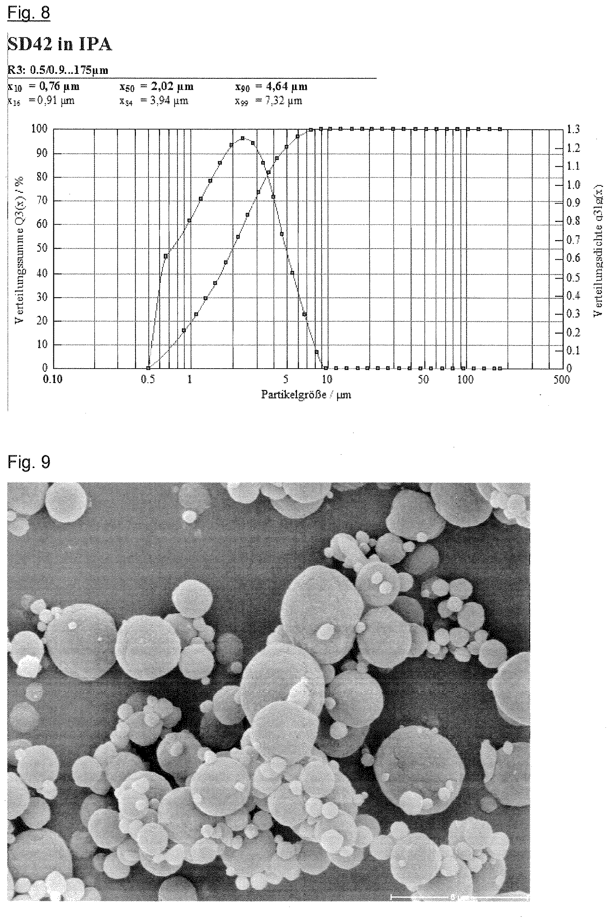

Eine gemäß Beispiel 2 hergestellte, erfindungsgemäße Cellulose-Mikrosuspension mit 4 Gew.-% Cellulosegehalt und 0,04% Sokolan PA30CL als Emulgator wurde bei 180°C Zuluft- und 72°C Ablufttemperatur getrocknet. Die Düsengröße betrug 1,4 mm. Die Partikelgrößenanalyse ergab folgende Werte: $x_{10}$=0,76 $\mu$m, $x_{50}$=2,02 $\mu$m, $x_{90}$=4,64$\mu$m. Fig. 8 zeigt die Partikelgrößenverteilung. Fig. 9 die bildliche Darstellung im REM.

**Patentansprüche**

**1.** Verfahren zur Herstellung einer phasenstabilen Suspension aus Cellulose-II in Wasser mit hohem Wasserrückhaltevermögen, **gekennzeichnet durch** folgende Verfahrensschritte:

    a. Herstellung einer Spinnmasse mit 10 bis 15 Gew.% Cellulose gemäß dem Lyocell-Verfahren,
    b. Ausfällen der Cellulose, wobei ein NMMO- und cellulosehaltiges Material erhalten wird,
    c. Waschen des Materials, bis es im Wesentlichen NMMO-frei ist,

d. Enzymatische Behandlung des NMMO-frei gewaschenen, feuchten Materials mit einer Endoglucanase oder einer Mischung aus Endo- und Exoglucanasen,

e. Zerkleinerung in einem Zerkleinerungsaggregat, wobei eine grobe Cellulose-Suspension erhalten wird,

f. Mikrozerkleinerung in einem Hochdruckhomogenisator zu einer stabilen Mikrosuspension.

**2.** Verfahren gemäß Anspruch 1, wobei die Enzymkonzentration in Schritt d. 0,1 bis 10,0 Gew.-%, bezogen auf die Cellulosemenge, beträgt.

**3.** Verfahren gemäß Anspruch 1, wobei in Schritt f. der Druck im Hochdruckhomogenisator zwischen 100 und 2000 bar beträgt.

**4.** Verfahren gemäß Anspruch 1, wobei in Schritt f. die Suspension zwischen 1 und 10 mal, bevorzugt zwischen 1 und 4 mal, durch den Hochdruckhomogenisator geführt wird.

**5.** Verfahren gemäß Anspruch 1, wobei in Schritt a. die Cellulosekonzentration 12 bis 14 Gew.-% beträgt.

**6.** Verfahren gemäß Anspruch 1 zur Herstellung von Cellulosepartikeln mit Cellulose-II-Struktur, einer sphärischen Form und einem durchschnittlichen Durchmesser $x_{50}$ von 1 bis 4 $\mu$m **gekennzeichnet durch** anschließende Sprühtrocknung.

**Claims**

**1.** A method for preparing a phase-stable suspension of cellulose II in water, having a high water retention capacity, **characterized by** the following steps:

a. Preparing a spinning dope with 10 to 15% by weight of cellulose according to the lyocell process,

b. precipitating the cellulose, whereby a material containing NMMO and cellulose is obtained,

c. washing the material until it is substantially NMMO-free,

d. enzymatic treatment of the moist material which has been washed free of NMMO with endoglucanase or a mixture of endoglucanases and exoglucanases

e. comminution in a comminution unit, whereby a coarse cellulose suspension is obtained,

f. microcomminution in a high pressure homogenizer into a stable microsuspension.

**2.** The method as claimed in claim 1, wherein the enzyme concentration in step d. is 0.1 to 10.0% by weight, related to the cellulose quantity.

**3.** The method as claimed in claim 1, wherein the pressure in the high pressure homogenizer in step f. is between 100 and 2000 bar.

**4.** The method as claimed in claim 1, wherein in step f. the suspension is passed between 1 and 10 times, preferably between 1 and 4 times, through the high pressure homogenizer.

**5.** The method as claimed in claim 1, wherein in step a. the cellulose concentration is 12 to 14% by weight.

**6.** The method as claimed in claim 1 for the preparation of cellulose particles having a cellulose II structure, a spherical shape, and an average diameter $x_{50}$ from 1 to 4 $\mu$m **characterized by** subsequent spray drying.

**Revendications**

**1.** Procédé pour la production d'une suspension aqueuse à phase stable de cellulose II à capacité élevée de rétention en eau, **caractérisée par** les étapes suivantes :

a. Production suivant le procédé Lyocell d'une pâte textile contenant entre 10 et 15 % en poids de cellulose,

b. Précipitation de la cellulose, permettant d'obtenir une matière contenant du NMMO et de la cellulose,

c. Lavage de la matière jusqu'à ce que celle-ci soit sensiblement exempte de NMMO,

d. Traitement enzymatique de la matière humide, lavée et exempte de NMMO, au moyen d'une endoglucanase ou d'un mélange d'endoglucanases et d'exoglucanases,

e. Fragmentation dans une unité de fragmentation, permettant d'obtenir une suspension grossière de cellulose,

f. Micro-fragmentation dans un homogénéisateur à haute pression jusqu'à obtention d'une micro-suspension stable.

2. Procédé selon la revendication 1, la concentration en enzymes à l'étape d. étant de 0,1 à 10,0 % en poids par référence à la quantité de cellulose.

3. Procédé selon la revendication 1, la pression dans l'homogénéisateur à haute pression étant comprise entre 100 et 2000 bars à l'étape f.

4. Procédé selon la revendication 1, faisant passer la suspension entre 1 et 10 fois, de préférence entre 1 et 4 fois, par l'homogénéisateur à haute pression à l'étape f.

5. Procédé selon la revendication 1, la concentration de la cellulose à l'étape a. étant de 12 à 14 % en poids.

6. Procédé selon la revendication 1 pour la production de particules à structure cellulosique II, de forme sphérique et d'un diamètre moyen $x_{50}$ de 1 à 4 $\mu$m, **caractérisé par** l'atomisation ultérieure.

Fig. 1:

Fig. 2:

Fig. 3:

Fig.4:

## SD2 in EtOH

R1: 0.1/0.18..35μm

$x_{10} = 1,09\ \mu m$    $x_{50} = 3,13\ \mu m$    $x_{90} = 7,60\ \mu m$
$x_{16} = 1,34\ \mu m$    $x_{84} = 6,33\ \mu m$    $x_{99} = 13,83\ \mu m$

Fig. 5:

## 2011100048-01 in EtOH    SD21

R1: 0.1/0.18..35μm

$x_{10} = 0,59\ \mu m$    $x_{50} = 2,10\ \mu m$    $x_{90} = 11,93\ \mu m$
$x_{16} = 0,83\ \mu m$    $x_{84} = 8,16\ \mu m$    $x_{99} = 21,75\ \mu m$

## Fig. 6: REM-Mikroskop-Aufnahme der Probe SD21

REM Details 5000x: Probe SD21

## Fig. 7:

### SD7 in EtOH

**R1**: 0.1/0.18..35µm

$x_{10} = 1{,}07$ µm    $x_{50} = 2{,}22$ µm    $x_{90} = 4{,}91$ µm
$x_{16} = 1{,}25$ µm    $x_{84} = 4{,}03$ µm    $x_{99} = 13{,}24$ µm

Fig. 8

## SD42 in IPA

R3: 0.5/0.9...175μm

$x_{10} = 0.76$ μm      $x_{50} = 2.02$ μm      $x_{90} = 4.64$ μm

$x_{16} = 0.91$ μm      $x_{54} = 3.94$ μm      $x_{99} = 7.32$ μm

Fig. 9

Fig. 10

Zentrifugenbecher

Glassinter-Tiegel

Probe

Stützhülse

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013006876 A1
- WO 2009036480 A1
- US 5064950 A
- WO 2004043329 A2
- US 5024831 A